Europäisches Patentamt

European Patent Office

Office européen des brevets

(19)

(11) Publication number: **0 077 184**
**B1**

(12)    EUROPEAN PATENT SPECIFICATION

(45) Date of publication of patent specification: **12.03.86**

(51) Int. Cl.⁴: **G 01 L 1/22**

(21) Application number: **82305343.4**

(22) Date of filing: **07.10.82**

(54) **Force transducers.**

(30) Priority: **08.10.81 US 309635**

(43) Date of publication of application:
**20.04.83 Bulletin 83/16**

(45) Publication of the grant of the patent:
**12.03.86 Bulletin 86/11**

(84) Designated Contracting States:
**DE FR GB IT**

(56) References cited:
**EP-A-0 018 013**
**DE-A-2 531 593**
**DE-A-2 818 140**
**DE-B-1 698 108**
**US-A-2 487 681**

(73) Proprietor: **THE BABCOCK & WILCOX COMPANY**
**1010 Common Street P.O. Box 60035**
**New Orleans Louisiana 70160 (US)**

(72) Inventor: **White, Jack M.**
**15031 Hook Hollow Road**
**Novelty Ohio 44072 (US)**

(74) Representative: **Cotter, Ivan John et al**
**D. YOUNG & CO. 10 Staple Inn**
**London WC1V 7RD (GB)**

EP 0 077 184 B1

Courier Press, Leamington Spa, England.

## Description

This invention relates to force transducers for generating output signals corresponding to input forces.

In a known kind of force transducer, an input force is applied at or near a free end of a leaf spring flexure cantilevered from a fixed support. A force so applied causes a corresponding angular displacement of the flexure about the fixed support in a clockwise or anti-clockwise direction, depending upon the sense of the input force. An output signal corresponding to the angular displacement of the flexure from a null or neutral position is produced by a strain gauge bonded to or diffused on the flexure.

An input force applied at or near the free end of a flexure of constant cross-sectional area produces a stress and a resulting strain which decreases from a maximum at the fixed support. The maximum allowable stress is limited by the material properties of the flexure. The average stress, which determines the resolution of the transducer, will necessarily be less than the maximum stress.

US Patent No. US—A—2 487 681 discloses a force transducer incorporating a wedge-shaped flexure having a rectangular cross-sectional area decreasing at a predetermined constant rate from a supported end thereof. Such a flexure is stressed uniformly, to a substantial degree, throughout its length, by an applied input force. The average stress, and hence the resolution of the transducer, is materially increased without exceeding the maximum allowable stress. However, with such a wedge-shaped flexure, to obtain straight-line proportionality between the input force and output signal it is necessary that the input force be applied normal to the flexure as it is angularly displaced from a null or neutral position.

German Published Patent Application No. DE—A—2 531 593 discloses a force transducer comprising: a compound flexure which comprises end portions joined by a portion which is of reduced thickness relative to the end portions, the portion of reduced thickness having at each end thereof a tapered section which is of maximum cross-sectional area at its end nearer the end portion of the flexure and which decreases lengthwise in cross-sectional area to a thin middle section which bridges the two tapered sections, one of the end portions of the flexure being anchored to and cantilevered from a fixed base and the other of the end portions of the flexure being anchored to and cantilevered from a movable base; means for applying an input force to the movable base to produce a strain in the portion of reduced thickness of the flexure; and at least one strain gauge mounted on a face of the portion of reduced thickness of the flexure to generate an output signal proportional to the strain. The movable base (bending tube) is fixed at one end with respect to the fixed base so that the movable base moves only in the sense that it is bent by the input force. It does not move bodily, i.e. as a whole.

US Patent No. US—A—3 554 024 (DE—B—1 698 108) discloses a force transducer comprising a force transducer which comprises a compound flexure in the form of an I-shaped beam, one end of the flexure being anchored to and cantilevered from a fixed base and the other end being anchored to and cantilevered from a movable base, means for applying an input force to the movable base to move the movable base bodily to produce a strain in the flexure, and a strain gauge mounted on a face of the web of the I-section to generate an output signal proportional to the strain.

The present invention seeks to provide a force transducer having a straight-line relationship between the magnitude of the input force and the output signal.

According to the present invention there is provided a force transducer comprising:

a compound flexure which comprises end portions joined by a portion which is of reduced thickness relative to the end portions, the portion of reduced thickness having at each end thereof a tapered section which is of maximum cross-sectional area at its end nearer the end portion of the flexure and which decreases lengthwise in cross-sectional area to a thin middle section which bridges the two tapered sections, one of the end portions of the flexure being anchored to and cantilevered from a fixed base and the other of the end portions of the flexure being anchored to and cantilevered from a movable base;

means for applying an input force to the movable base to produce a strain in the portion of reduced thickness of the flexure; and

at least one strain gauge mounted on a face of the portion of reduced thickness of the flexure to generate an output signal proportional to the strain; characterised in that:

each of the tapered sections decreases lengthwise in cross-sectional area at a predetermined gradient and is of rectangular cross-section in a plane perpendicular to the longitudinal centre-line of the flexure, the longer side of the rectangular cross-section being perpendicular to the direction of the input force and the smaller side of the rectangular cross-section decreasing in the direction towards the thin middle section;

the means for applying the force to the movable base comprises means for producing a linear bodily displacement of the movable base normal to the longitudinal centre-line of the flexure; and

the strain gauge is mounted on a face of at least one of the two tapered sections.

Since the input force causes the free end of the flexure to be displaced linearly, the strain (and therefore the output signal) varies in linear proportion to the input force.

Force transducers embodying the invention and described hereinbelow are of compact design and generate output signals of high accuracy and resolution with minimum dead band and hysteresis.

The invention will now be further described, by way of illustrative and non-limiting example, with reference to the accompanying drawings, in which like references designate like or corresponding parts throughout the several figures, and in which:

Figure 1 is a partially sectional view of a force transducer embodying this invention;

Figure 2 is a fragmentary view taken along the line 2—2, in the direction of the arrows, in Figure 1;

Figure 3 is a side view of a modified form of flexure for the force transducer;

Figure 4 is a plan view of the flexure illustrated in Figure 3;

Figure 5 is a fragmentary illustration of a modified form of flexure assembly for the force transducer;

Figure 6 is a diagrammatic illustration, in exaggeration, of displacement of the flexures shown in Figures 1, 2 and 3, 4 produced by an input force;

Figure 7 is a diagrammatic illustration, in exaggeration, of displacement of the flexure shown in Figure 5 produced by an input force; and

Figure 8 is an elementary diagram of a typical circuit for producing an output signal corresponding in magnitude to the magnitude of an input force.

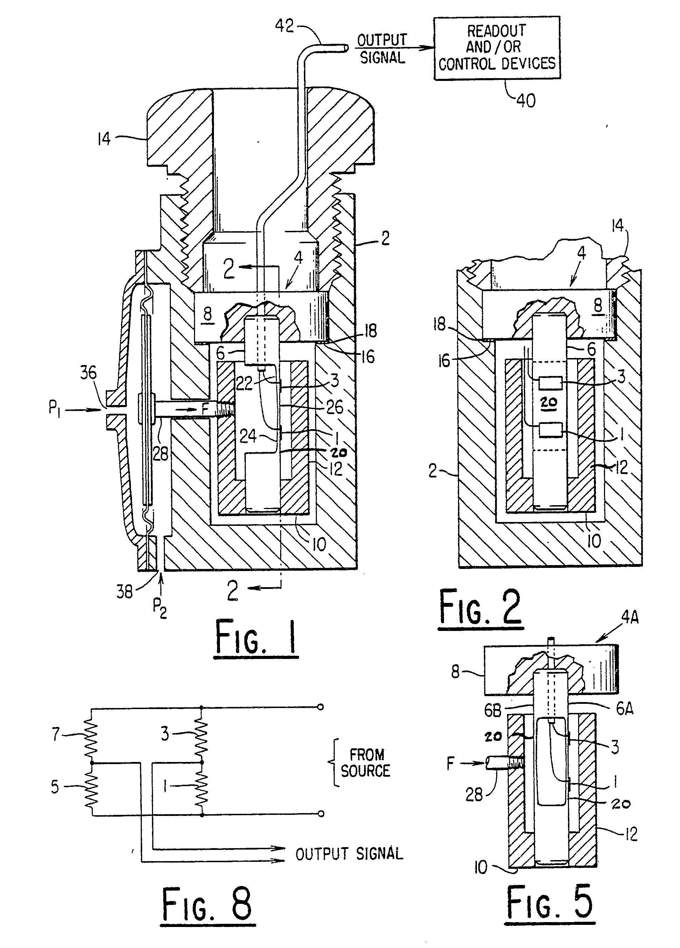

Figures 1 and 2 of the drawings show a force transducer having a cylindrical housing 2 in which a flexure assembly 4 is positioned. The flexure assembly 4 comprises a compound flexure 6 having one end portion thereof anchored in and cantilevered from a fixed base 8 and the other end portion thereof anchored in and cantilevered from a closed end or base 10 of a hollow cylinder 12. Between its two end portions the flexure 6 comprises a portion which is of reduced thickness relative to the end portions. The portion of reduced thickness comprises two tapered sections (having front faces 22, 24, respectively) which are bridged by a thin middle section 26.

The housing 2 is provided with an open end for insertion and removal of the assembly 4. When inserted, the assembly 4 is held fixed in position by a nipple 14 which, when screwed into the housing 2, clamps the fixed base 8 to an annular face 16. If a pressure seal is required, a washer 18 may be inserted between the fixed base 8 and the annular face 16.

The compound flexure 6 has a planar (when in a null or neutral position) rectangular rear face 20 and the opposed front faces 22 and 24 of the tapered sections converge to the thin middle section 26 to provide a rectangular cross-sectional area which is at a maximum at the bases 8 and 10 and which decreases at a predetermined gradient to a minimum at the thin middle section 26.

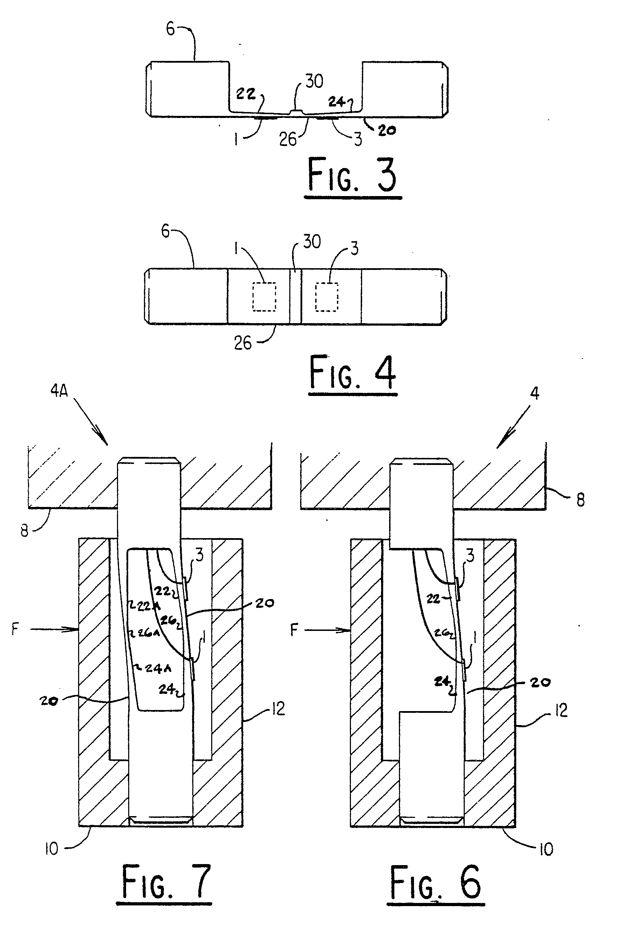

An input force F applied normal to the cylinder 12 by means, such as a rod 28, passing through a penetration in the housing 2 and in line with the centre of the thin middle section 26, causes a proportionate linear displacement of the base 10, thus placing the face 22 in tension and the face 24 in compression, as shown to exaggeration in Figure 6, recognising that the maximum linear travel of the cylinder 12 is in the order of 0.102 mm (0.004 inches). By having the free end of the flexure 6 constrained to perform linear movement, a straight-line relationship between the magnitude of the input force F and the strain on the faces 22 and 24 is obtained and hysteresis is minimised.

Figures 3 and 4 show a modified form of the flexure 6 wherein, on the thin middle section 26, a ridge 30 is formed to run transversely of the longitudinal centre-line of the flexure. This requires that, for a designed maximum input force F, the length of the tapered sections (having the front faces 22 and 24) be increased to produce a designed maximum displacement of the flexure from a null or neutral position. Such a modified form of flexure is particularly applicable in the measurement of relatively small ranges in input forces.

Figure 5 shows a modified form 4A of the flexure assembly, comprising parallel compound flexures 6A and 6B having facing converging sections and planar rectangular rear faces. Thus, the force F produces tension in diagonally opposed faces 22 and 24A and compression in diagonally opposed faces 22A and 24 (Figure 7).

Force transducers embodying this invention can be applied to the measurement of any physical condition, such as (but not limited to) absolute, gauge or differential pressure, temperature, liquid level, and rate of fluid flow, which can be translated into an input force F. As one illustration of a means for producing the force F, there is shown in Figure 1 a diaphragm capsule comprising a diaphragm connected to the rod 28. The input force F produced in this case is proportional to the difference in pressures $P_1$ and $P_2$ impressed on the opposite sides of the diaphragm through ports 36 and 38 respectively.

To generate an output signal proportional to the strain produced by an input force F there may be bonded to or diffused on the flexure(s) strain gauges such as shown at 1 and 3, connections from which are made via one or more pressure-tight penetrations in the base 8 and a cable 42 to such readout and/or control devices 40 as may be required by the exigencies of a particular application.

As shown, the strain gauges 1 and 3 are preferably located on the faces of sections of the rear face 20 subtending the front faces 24 and 22, respectively. With this arrangement, the strain gauge 3 will be in compression when the face 22 is in tension and the strain gauge 1 will be in tension when the face 24 is in compression. As evident, an output signal could be produced by a single strain gauge placed on one face of the flexure. However, an enhanced signal, self-compensating for variations in ambient conditions, is obtained by a pair of strain gauges, one of which, such as the strain gauge 1, is placed in tension, and the other of which, such as the strain gauge 3, is placed in compression by the input force F.

The strain gauges 1 and 3 may be incorporated in any one of a wide variety of circuit configurations to produce the output signal. As an example of one such circuit there is shown in Figure 8 an elementary diagram of a circuit in which the strain gauges 1 and 3 are connected in series, in push-pull relationship across a suitable source of potential. Resistances 5 and 7 connected in series across the source and in parallel with the strain gauges 1 and 3 complete the circuit configuration.

### Claims

1. A force transducer comprising:
a compound flexure (6) which comprises end portions joined by a portion which is of reduced thickness relative to the end portions, the portion of reduced thickness having at each end thereof a tapered section which is of maximum cross-sectional area at its end nearer the end portion of the flexure and which decreases lengthwise in cross-sectional area to a thin middle section (26) which bridges the two tapered sections, one of the end portions of the flexure (6) being anchored to and cantilevered from a fixed base (8) and the other of the end portions of the flexure (6) being anchored to and cantilevered from a movable base (10);
means for applying an input force to the movable base (10) to produce a strain in the portion of reduced thickness of the flexure; and
at least one strain gauge (1, 3) mounted on a face of the portion of reduced thickness of the flexure (6) to generate an output signal proportional to the strain; characterised in that:
each of the tapered sections decreases lengthwise in cross-sectional area at a predetermined gradient and is of rectangular cross-section in a plane perpendicular to the longitudinal centre-line of the flexure, the longer side of the rectangular cross-section being perpendicular to the direction of the input force and the smaller side of the rectangular cross-section decreasing in the direction towards the thin middle section (26);
the means for applying the force to the movable base (10) comprises means for producing a linear bodily displacement of the movable base normal to the longitudinal centre-line of the flexure (6); and
the strain gauge (1, 3) is mounted on a face of at least one of the two tapered sections.

2. A transducer according to claim 1, wherein the portion of reduced thickness of the compound flexure (6) has a planar rectangular rear face (20) and the tapered sections of the portion of reduced thickness comprise respective front faces (22, 24) that converge with respect to the rear face (20) in directions towards the thin middle section (26), and wherein the strain gauge (1, 3) is located on the rear face (20) in an area subtended by at least one of the front faces (22, 24).

3. A transducer according to claim 2, wherein the compound flexure (6) is formed with a ridge (30) normal to the longitudinal centre-line thereof and passing through the centre of the thin middle section (26).

4. A transducer according to claim 1, claim 2 or claim 3, wherein the means for producing a linear displacement comprises a force-receiving linearly movable rod (28) positioned normal to the longitudinal centre-line of the compound flexure (6) and in line with the centre of the thin middle section (26) and a rigid connection between the rod (28) and the movable base (10) to thereby constrain the movable base (10) to perform linear displacement.

5. A transducer according to claim 4, wherein the movable base (10) is a closed end of a hollow cylinder (12) surrounding the compound flexure (6) and in which the rod (28) is anchored to form the rigid connection.

6. A transducer according to any one of the preceding claims, including a flexure assembly (4A) that comprises two said compound flexures (6A, 6B) arranged parallel and face-to-face and a common fixed base (8) and a common movable base (10) in which the ends of the compound flexures (6A, 6B) are anchored and from which they are cantilevered.

### Patentansprüche

1. Kraftwandler mit einem Biegekörper (6), der Endteile aufweist, welche durch ein Teil verbunden sind, welches bezüglich der Endteile eine reduzierte Dicke hat, wobei der Teil reduzierter Dicke an seinem jeweiligen Ende einen verjüngten Abschnitt hat, dessen maximale Querschnittsfläche sich an seinem Ende befindet, welches näher am Endteil des Biegekörpers ist, wobei die Querschnittsfläche des Abschnittes längs zu einem dünnen Mittelabschnitt (26) hin abnimmt, welcher die zwei verjüngten Abschnitte überbrückt, und wobei einer der Endteile des Körpers (6) an einer festen Basis (8) verankert und dort einseitig eingespannt ist und das andere Endteil des Körpers (6) an einer beweglichen Basis (10) verankert und einseitig eingespannt ist; Mitteln zum Aufbringen einer Eingangskraft auf die bewegbare Basis (10) zur Erzeugung einer Belastung (Verformung unter Last) in dem Teil reduzierter Dicke des Körpers; und mit mindestens einem Dehnungsmeßstreifen (1, 3), der auf einer Fläche des Teils reduzierter Dicke des Körpers (6) angebracht ist, um ein Ausgangssignal zu erzeugen, welches zu der Belastung proportional ist; dadurch gekennzeichnet, daß:
die Querschnittsfläche jedes der verjüngten Abschnitte längs mit einem bestimmten Gradient abnimmt und wie der verjüngte Abschnitt einen rechteckigen Querschnitt in einer Ebene hat, die senkrecht zur Längsmittellinie des Körpers ist, wobei die längere Seite des rechteckigen Querschnittes senkrecht zur Richtung der Eingangskraft liegt und die kleinere Seite des rechteckigen Querschnittes in Richtung zum dünnen Mittelabschnitt (26) hin abnimmt;
daß Mittel zum Aufbringen der Kraft auf die bewegbare Basis (10) Mittel aufweist zur Erzeugung einer linearen Körperverschiebung der bewegbaren Basis normal zur Längsmittellinie des Biegekörpers (6); und daß

der Dehnungsmeßstreifen (1, 3) auf einer Fläche mindestens eines der zwei verjüngten Abschnitte angebracht ist.

2. Wandler nach Anspruch 1, wobei der Teil reduzierter Dicke des Biegekörpers (6) eine ebene, rechteckige Hinterfläche (20) hat und die verjüngten Abschnitte des Teiles reduzierter Dicke entsprechende Vorderflächen (22, 24) aufweisen, die bezüglich der Hinterfläche (20) in Richtungen zu dem dünnen Mittelabschnitt (26) hin konvergieren, und wobei der Dehnungsmeßstreifen (1, 3) auf der hinteren Fläche (20) in einer von mindestens einer der Vorderflächen (22, 24) begrenzten Fläche angeordnet ist.

3. Wandler nach Anspruch 2, wobei der Biegekörper (6) mit einem Steg (30) geformt ist, welcher normal zur Längsmittellinie des Biegekörpers liegt und durch die Mitte des dünnen Mittelabschnittes (26) hindurchgeht.

4. Wandler nach Anspruch 1, Anspruch 2 oder Anspruch 3, wobei das Mittel zur Erzeugung einer linearen Verschiebung eine kraftaufnehmende, linear bewegbare Stange (28) aufweist, die normal zur Längsmittellinie des Biegekörpers (6) und in Flucht mit dem Zentrum des dünnen Mittelabschnittes (26) angeordnet ist, sowie eine starre Verbindung zwischen der Stange (28) und der bewegbaren Basis (10), wodurch die bewegbare Basis (10) gezwungen wird, eine lineare Verschiebung durchzuführen.

5. Wandler nach Anspruch 4, wobei die bewegbare Basis (10) ein geschlossenes Ende eines hohlen Zylinders (12) ist, welcher den Biegekörper (6) umgibt und in welchem die Stange (28) zur Bildung einer starren Verbindung verankert ist.

6. Wandler nach einem der vorhergehenden Ansprüche, mit einem Biegeaufbau (4A), der zwei solche Biegekörper (6A, 6B) aufweist, die parallel zueinander und einander zu gerichtet sind, und eine gemeinsame feste Basis (8) sowie eine gemeinsame bewegbare Basis (10) aufweist, in welcher die Enden der Biegekörper (6A, 6B) verankert sind und in welchen sie einseitig eingespannt sind.

**Revendications**

1. Un transducteur de force comprenant:

un élément flexible composé (6) qui comprend des parties d'extrémité réunies par une partie qui présente une épaisseur réduite par rapport aux parties d'extrémité, la partie d'épaisseur réduite comportant à chacune de ses extrémités une section allant en diminuant qui présente une aire de section droite maximale à son extrémité la plus proche de la partie d'extrémité de l'élément flexible, et dont l'aire de section droite diminue longitudinalement en direction d'une section médiane mince (26) qui réunit les deux sections allant en diminuant, l'une des parties d'extrémité de l'élément flexible (6) étant ancrée en porte à faux dans une base fixe (8), et l'autre partie d'extrémité de l'élément flexible (6) étant ancrée en porte à faux dans une base mobile (10);

des moyens destinés à appliquer une force d'entrée à la base mobile (10), pour produire une déformation dans la partie d'épaisseur réduite de l'élément flexible; et

au moins un extensomètre (1, 3) monté sur une face de la partie d'épaisseur réduite de l'élément flexible (6), pour produire un signal de sortie proportionnel à la déformation; caractérisé en ce que:

chacune des sections allant en diminuant présente une aire de section droite qui diminue en direction longitudinale avec un gradient prédéterminé et présente une section droite rectangulaire dans un plan perpendiculaire à l'axe longitudinal de l'élément flexible, le grand côté de la section droite rectangulaire étant perpendiculaire à la direction de la force d'entrée et le petit côté de la section droite rectangulaire diminuant en direction de la section médiane mince (26);

les moyens destinés à appliquer la force à la base mobile (10) comprennent des moyens destinés à produire un déplacement linéaire d'ensemble de la base mobile dans une direction normale à l'axe longitudinal de l'élément flexible (6); et

l'extensomètre (1, 3) est monté sur une face de l'une au moins des deux sections allant en diminuant.

2. Un transducteur selon la revendication 1, dans lequel la partie d'épaisseur réduite de l'élément flexible composé (6) comporte une face arrière rectangulaire et plane (20), et les sections de la partie d'épaisseur réduite qui vont en diminuant comportent des faces avant respectives (22, 24) qui convergent vers la face arrière (20) en direction de la section médiane mince (26), et dans lequel l'extensomètre (1, 3) est placé sur la face arrière (20) dans une région située à l'opposé de l'une au moins des faces avant (22, 24).

3. Un transducteur selon la revendication 2, dans lequel l'élément flexible composé (6) comporte une nervure (13) normale à son axe longitudinal et passant par le centre de la section médiane mince (26).

4. Un transducteur selon la revendication 1, la revendication 2 ou la revendication 3, dans lequel les moyens destinés à produire un déplacement linéaire comprennent une tige de réception de force (28), mobile de façon linéaire, qui est placée de façon à être normale à l'axe longitudinal de l'élément flexible composé (6), et en alignement avec le centre de la section médiane mince (26), et un accouplement rigide entre la tige (28) et la base mobile (10), pour obliger ainsi la base mobile (10) à effectuer un mouvement linéaire.

5. Un transducteur selon la revendication 4, dans lequel la base mobile (10) est une extrémité fermée d'un cylindre creux (12) entourant l'élément flexible composé (6), et dans lequel la tige (28) est ancrée pour former l'accouplement rigide.

6. Un transducteur selon l'une quelconque des revendications précédentes, comprenant une structure d'élément flexible (4A) qui comporte deux desdits éléments flexibles composés (6A, 6B) disposés parallèlement et face à face, une base fixe commune (8) et une base mobile commune (10) dans lesquelles les extrémités des éléments flexibles composés (6A, 6B) sont ancrées avec un montage en porte à faux.

FIG. 1

FIG. 2

FIG. 8

FIG. 5

**0 077 184**

FIG. 3

FIG. 4

FIG. 7

FIG. 6

2